# EUROPEAN PATENT SPECIFICATION

(11) **EP 4 342 690 B1**
(45) Date of publication and mention of the grant of the patent: **11.06.2025**
(21) Application number: 22852707.3
(22) Date of filing: 23.06.2022
(51) Int. Cl.: B60C 11/13, B60C 11/03

(54) **TIRE**
REIFEN
PNEU

(30) Priority: 04.08.2021 JP 2021128530
(43) Date of publication of application: 27.03.2024
(73) Proprietor: BRIDGESTONE CORPORATION, Chuo-ku Tokyo 104-8340 (JP)
(72) Inventor: YOKOYAMA Akinori, Tokyo 104-8340 (JP)
(74) Representative: Marks & Clerk LLP
(86) International application number: PCT/JP2022/025158
(87) International publication number: WO 2023/013281

(56) References cited:
- GB-A- 2 329 161
- JP-A- 2013 049 325
- JP-A- 2013 129 427
- JP-A- 2016 124 442
- JP-A- 2016 124 442
- JP-A- 2018 039 482
- JP-A- 2019 026 189
- JP-A- 2019 026 241
- JP-A- 2019 026 241
- JP-A- 2019 182 246
- JP-A- 2020 117 151
- US-A- 2 327 057
- US-A- 3 462 328

## Description

### TECHNICAL FIELD

This invention relates to a tire.

### BACKGROUND

A tire comprising grooves with a wider width at the groove bottom, in order to suppress the decrease in drainage performance when tire wear develops, has been disclosed (Patent Document 1). Attention is also drawn to the disclosures of US2327057A, US3462328A, JP2016-124442A, GB2329161A and JP2019-026241A which discloses a tire with a plurality of circumferential main grooves including a pair of shoulder main grooves having different inclination angles of the groove walls with respect to a radial direction.

### CITATION LIST

### Patent Literature

PTL 1: JP 2019/127228

### SUMMARY

### (Technical Problem)

However, the conventional technology may reduce steering stability as the vehicle is turning.

It is therefore an object of the present invention to provide a tire that can maintain drainage performance when tire wear develops while ensuring steering stability as the vehicle is turning.

### (Solution to Problem)

The invention is as follows.
A tire according to claim 1.

### (Advantageous Effect)

According to the present invention, it is possible to provide a tire that can maintain drainage performance when tire wear develops while ensuring steering stability as the vehicle is turning.

### BRIEF DESCRIPTION OF THE DRAWINGS

In the accompanying drawings:
FIG. 1 is a partially developed view of a tire according to the first embodiment of this invention, schematically illustrating the tread surface;
FIG. 2 is a cross-sectional view in the tire width direction, illustrating a portion of the tire in FIG. 1 in a cross-section along line A-A in FIG. 1;
FIG. 3 is a partial cross-sectional view in the tire width direction, schematically illustrating the circumferential main groove of the tire illustrated in FIG. 2.
FIG. 4 is a partially developed view of a tire according to the second embodiment of this invention, schematically illustrating the tread surface;
FIG. 5 is a partially developed view, schematically illustrating an enlarged portion of the tread surface in FIG. 4; and
FIG. 6 explains another example of a width direction groove.

### DETAILED DESCRIPTION

The tires according to the present invention can be used for any type of tire, but are suitably used for passenger vehicle tires.

Hereinafter, embodiments of the tires according to the present invention will be described by way of example with reference to the drawings. Common components in each figure are given the same reference numerals.

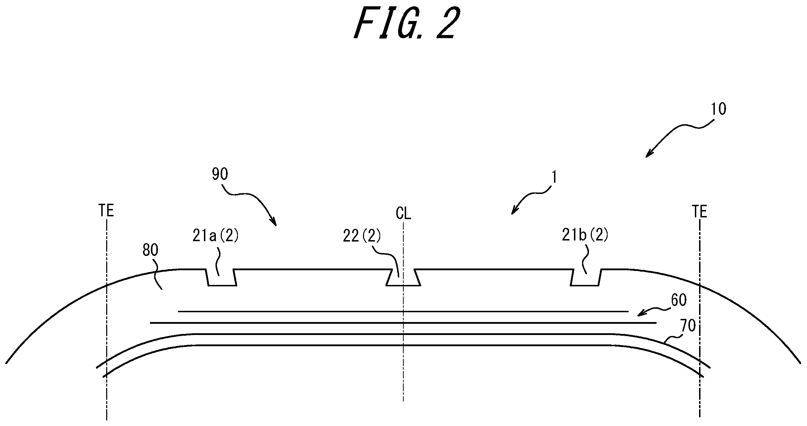

The tire in each of the embodiments described herein may have any internal configuration. The tire in each of the embodiments described herein, for example, can comprises a pair of bead cores (not illustrated) provided in a pair of bead portions, a pair of bead fillers (not illustrated) located on the outer side in the tire radial direction of the bead core, a carcass 70 (Figure 2), a belt 60 (Figure 2), a tread rubber 80 (Figure 2). The carcass 70 extends toroidally between the pair of bead cores. The carcass 70 includes at least one layer of carcass ply (one layer in the illustrated example). The carcass ply of the carcass 70 can be composed of, for example, steel or organic fiber cords coated with rubber. The carcass 70 can include, for example, a body portion extending toroidally between the pair of bead cores, and a pair of turn-up portions folded from the innermost end in the tire radial direction of the body portion around the bead cores toward the outer side in the tire width direction, on each side of the tire equatorial plane CL. The belt 60 is disposed in the tread portion 90, on the outer side in the tire radial direction than the crown area of the carcass 70 (Figure 2). The belt 60 consists of at least one belt layer (two layers in the illustrated example). The belt layer can be composed of, for example, steel or organic fiber cords coated with rubber. Tread rubber 80 is disposed on the outer side in the tire radial direction of the belt 60.

As used herein, the term "tread surface (1)" means the outer circumferential surface of the tire that is in contact with the road surface when the tire is mounted on a rim, filled with prescribed internal pressure, and rolled under a maximum load.

As used herein, the term "tread edge (TE)" means the outer edge of the tread surface (1) in the tire width direction.

In addition, as used herein, the term "ground contact length" means the length along the tire circumferential direction of a ground contact patch where the tire contacts the road surface, and the term "ground contact patch" means the outer surface of the tire that contacts the road surface when the tire is mounted on a rim, filled with prescribed internal pressure, and grounded with a maximum load applied.

Here, the term "rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "rim" includes current sizes as well as future sizes to be listed in the aforementioned industrial standards. An example of the "size as described in the future" could be the sizes listed as "FUTURE DEVELOPMENTS" in the ETRTO's STANDARDS MANUAL 2013 edition.). For sizes not listed in the above industrial standards, the term "rim" refers to a rim with a width corresponding to the bead width of the tire.

In addition, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

The term "maximum load" shall mean the load corresponding to the above maximum load capacity.

Note, that the term "air" used herein can be replaced by inert gas such as nitrogen gas or other inert gas.

In this document, unless otherwise noted, the dimensions of each element such as grooves and land portions etc., shall be measured in the "reference condition" described below.

In this document, the "reference condition" refers to the condition in which the tire is mounted on the rim, filled with the above prescribed internal pressure, and unloaded.

Also, in this document, the "groove width of circumferential main groove" shall mean the length in the direction perpendicular to the extending direction of the circumferential main groove, as measured in the above reference condition. Similarly, the "groove width of width direction groove" shall mean the length in the direction perpendicular to the extending direction of the width direction groove, as measured under reference conditions.

### [First embodiment]

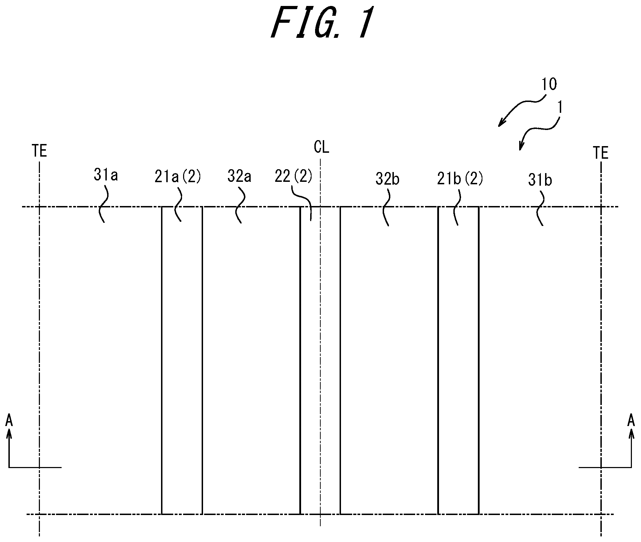

The tire according to the first embodiment of this invention is described below with reference to Figures 1, 2, and 3.

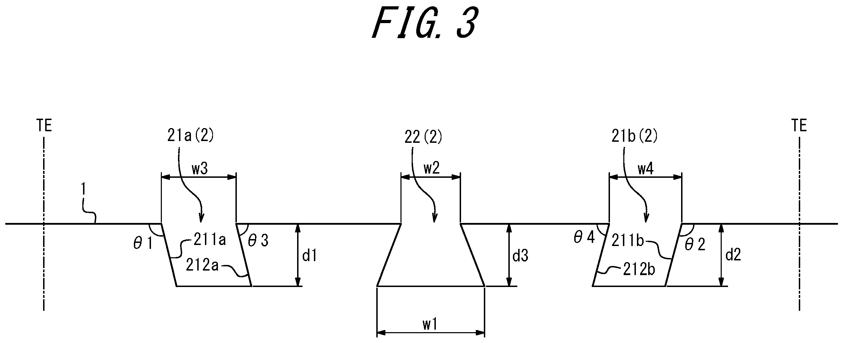

Figure 1 is a partially developed view of a tire 10 according to the first embodiment of this invention, schematically illustrating the tread surface 1. Figure 2 is a cross-sectional view in the tire width direction, illustrating a portion of the tire 10 in Figure 1 in a cross-section along line A-A in Figure 1. Figure 3 is a partial cross-sectional view in the tire width direction, schematically illustrating the circumferential main groove of the tire illustrated in Figure 2.

As illustrated in Figure 1, the tire 10 of the first embodiment comprises a plurality of circumferential main grooves 2 on the tread surface 1. Each circumferential main groove 2 extends in the tire circumferential direction. Each circumferential main groove 2 may extend in a straight line along the circumferential direction, as illustrated in Figure 1, or it may extend circumferentially in a zigzag or wavy shape, etc.

Each circumferential main groove 2 has a groove width that prevents the two side walls from contacting each other when the tire is grounded. That is, the circumferential main grooves are configured so that when the tire is mounted on the rim, filled with the prescribed internal pressure, and loaded with the maximum load, the pair of opposite groove walls do not contact each other at the position directly under the load.

Among these three or more circumferential main grooves 2, the pair of circumferential main grooves disposed on the outermost side in the tire width direction are referred to as the shoulder main grooves 21a and 21b. In addition, among the three or more circumferential main grooves 2, the circumferential main groove(s) other than the pair of shoulder main grooves 21a and 21b is/are referred to as the center main groove(s) 22.

In this embodiment, there is one center main groove 22, however a plurality of center main grooves may be provided.

In addition, the tread surface 1 of the tire 10 of the first embodiment has four land portions 31a, 31b, 32a, and 32b defined by the shoulder main grooves 21a and 21b, the center main groove 22, and the tread edges TE. The tread edges TE and the shoulder main grooves 21a and 21b define shoulder land portions 31a and 31b on the outer side in the tire width direction, and the center main groove 22 and the shoulder main grooves 21a and 21b define a center land portions 32a and 32b on the inner side in the tire width direction than the shoulder land portions 31a and 31b.

In the tire 10 of the first embodiment, at least one of the pair of shoulder main grooves disposed on the outermost side in the tire width direction, that is the pair of shoulder main grooves 21a and 21b disposed on the outermost side in the tire width direction in Figure 3, are configured such that the inclination angles θ1 and θ2 formed by the groove walls 211a and 211b on the tread edge TE side and the tread surface 1, respectively, are greater than 90°.

The inclination angles θ1 and θ2 may vary from the tread surface 1 to the groove bottom, but are configured to be greater than 90° from the tread surface 1 to the groove bottom.

In addition, the inclination angles θ1 and θ2 may be the same or different values.

Note, that when an asymmetric pattern is used, it is preferable that the inclination angle of the groove wall on the tread edge TE side of the shoulder main groove on the vehicle-installed outside is more than 90°, and the inclination angle of the groove wall of the shoulder main groove on the vehicle-installed inside is not limited.

In this embodiment, at least one circumferential main groove other than the pair of shoulder main grooves 21a and 21b (center main groove 22 in this embodiment) among the three or more circumferential main grooves 2 is a widened main groove configured such that the maximum groove width position in the groove depth direction is located on the groove bottom side than the tread surface position. In this example, the center main groove 22, in the reference condition, has a groove width w1 at the groove bottom as a maximum groove width, and on the outer side in the tire radial direction than the groove bottom, i.e., the tread surface 1 side, groove width is smaller than the groove width w1 at any position. In this embodiment, the groove width gradually decreases from the groove bottom side having the groove width w1 toward the outer side in the tire radial direction, and the groove width w2 at the tread surface 1 is a minimum groove width. Note, that the center main groove 22 only need to have the maximum groove width position in the groove depth direction on the groove bottom side than the tread surface position, and it shall include a plurality of maximum groove width positions in the groove depth direction.

The effects of the tire configuration of the first embodiment will be explained.

When the vehicle is turning, the ground contact length of the ground contact patch of the tire in the tire circumferential direction tends to be longer on the far side in the tire width direction than on the closer side in the tire width direction to the curve that the vehicle is trying to turn. In addition, the input from the road surface and the load applied to the tire are borne by the side with the longer ground contact length. Therefore, by making the inclination angle formed by the groove walls on the tread edge TE side of the circumferential main grooves disposed outermost side in the tire width direction and the tread surface (in this embodiment, the inclination angles θ1 and θ2 formed by the groove walls 211a and 211b on the tread edge TE side of the shoulder main grooves 21a and 21b and the tread surface 1) larger than 90°, the opening ends of the groove walls are less likely to be crushed, thereby increasing the rigidity of the land portions in the tire width direction and securing steering stability as the vehicle is turning.

In addition, according to the tire of this embodiment, since the center main groove 22 is configured such that the maximum groove width position of the center main groove 22 is located at the groove bottom side rather than the tread surface position, thus the portion having the larger groove width are exposed on the tread surface 1 when tire wear develops, the drainage performance when tire wear develops can be improved compared to the case where the maximum groove width position of the center main groove 22 is located at the tread surface position, and the reduction in drainage performance can be suppressed even when tire wear develops. Since the center main groove 22 is positioned inward in the tire width direction from the shoulder main grooves 21a and 21b, the ground contact pressure in the tire width direction tends to be higher relative to the shoulder main groove side as the tire is running straight, which is particularly effective in ensuring sufficient drainage performance as the tire is running straight when tire wear develops.

In addition, since the shape, etc., of the shoulder main grooves 21a and 21b and the center main groove 22 can be different in a cross sectional view in the tire width direction, the air column resonance sound generated by the resonance of the air in the tube, which is surrounded by the circumferential main grooves and the road surface as the vehicle is running, can be dispersed in frequency, to reduce air column resonance sound more effectively and mitigate (make it less grating) the overall noise of the tire.

Hereinafter, preferred configurations, modifications, etc. of the tire of the first embodiment will be described.

In this embodiment, the inclination angles θ1 and θ2 formed by the groove walls 211a and 211b on the tread edge TE side and the tread surface 1, respectively, are not limited as long as the inclination angle is greater than 90°. However, to increase the rigidity of the land portions in the tire width direction and to ensure the steering stability more effectively as the vehicle is turning, it is preferable that the angle be 95° or greater. The inclination angles θ1 and θ2 are preferably 120° or less from the viewpoint of effectively ensuring sufficient drainage performance. More preferably, the inclination angles θ1 and θ2 are 100° or greater and 130° or less.

In this embodiment, the pair of shoulder main grooves 21a and 21b are configured such that the inclination angles θ3 and θ4 formed by the groove walls 212a and 212b on the tire equatorial plane CL side and the tread surface 1, respectively, are 90° or less. This configuration can suppress the reduction in drainage performance when the tire is new and when tire wear develops.

The inclination angles θ3 and θ4 are preferably 70° or more to prevent uneven tire wear more effectively and to ensure steering stability as the vehicle is turning.

More preferably, the inclination angles θ3 and θ4 are 75° or more and 85° or less.

In the shoulder main groove 21a, the relationship between opposing groove walls 211a and 212a is not limited, nor is the relationship between opposing groove walls 211b and 212b in the shoulder main groove 21b. As illustrated in Figure 3, for example, the groove walls 211a and 212a and the groove walls 211b and 212b may be parallel to each other in a cross-sectional view in the tire width direction. According to this configuration, the shoulder main grooves 21a and 21b are shaped to have a constant groove width in the tire radial direction, which effectively suppresses the reduction in drainage performance when tire wear develops compared to main grooves where the tire maximum groove width position is at the tread surface position.

Not limited to the above configuration, for example, the groove walls 211a and 212a and the groove walls 211b and 212b may be configured so that the groove width increases progressively from the tread surface 1 side to the groove bottom side, respectively, in a cross-sectional view in the tire width direction. According to this configuration, the shoulder main grooves 21a and 21b can effectively suppress the reduction in drainage performance when tire wear develops compared to the main grooves where the tire maximum groove width position is at the tread surface position.

In the tire of the first embodiment, the groove width of each circumferential main groove 2 is not limited as long as the grooves have a groove width that prevents the two side walls from contacting each other when the tire is grounded. However, it is preferable that the minimum groove width of the center main groove 22 (w2 in the example in Figure 3) and w3 and w4 of the shoulder main grooves 21a and 21b are 1.5 mm or more. This configuration can contribute to maintaining drainage performance both when the tire is new and when tire wear develops.

Note, that in this embodiment, the groove widths w3 and w4 of the shoulder main grooves 21a and 21b are constant in the tire radial direction from the tread surface 1 to the groove bottom, but if the groove width is not constant, the minimum groove width is preferably 1.5 mm or more.

The depth of each circumferential main groove 2 (groove depths d1, d2 and d3 in Figure 3) is preferably 3.0 mm or more. This configuration will help maintain drainage performance. From the viewpoint of the rigidity of the tire 10, the groove depth of each circumferential main groove 2 (groove depths d1, d2 and d3 in Figure 3) is preferably 20 mm or less. More preferably, the groove depth of each circumferential main groove 2 is 3.0 mm or more in terms of maintaining drainage performance, and 15 mm or less in terms of the rigidity of tire 10.

In the tire 10 of the first embodiment, the number of widened main grooves configured such that the tire maximum groove width position is located on the groove bottom side than the tread surface position is one (center main groove 22), but the number is not limited. The number of widened main grooves is preferably one or more, especially from the viewpoint of ensuring sufficient drainage performance when tire wear develops, and three or fewer from the viewpoint of ensuring steering stability of the tire 10.

The circumferential main grooves that are not the widened main grooves, such as circumferential main grooves whose tire maximum groove width position is at the tread surface position, and circumferential main grooves whose opposing groove walls are parallel to each other in a cross-sectional view in the tire width direction, are two in this embodiment. That is the pair of shoulder main grooves 21a and 21b located on the outermost side in the tire circumferential direction are correspond to it. However, three or more circumferential main grooves that are not the widened main grooves may be provided from the viewpoint of more effectively securing steering stability during vehicle turning. The number of circumferential main grooves that are not the widened main grooves is preferably 4 or less from the viewpoint of preventing the reduction of drainage performance when the tire is new and when tire wear develops.

### [Second embodiment]

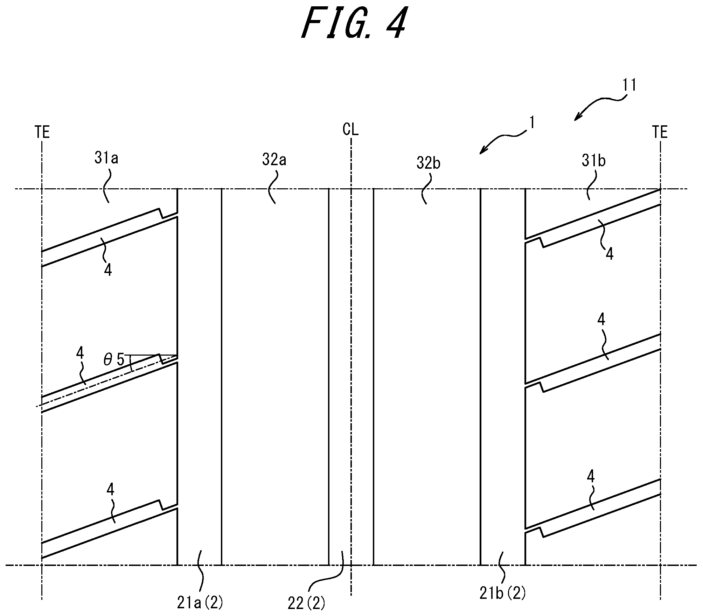

Next, a tire according to another embodiment (second embodiment) of the present invention will be described with reference to FIG. 4. The tire 11 of the second embodiment has the same configuration as the tire 10 of the first embodiment, except that it comprises width direction grooves that connect to a pair of shoulder main grooves 21a and 21b, and components similar to those in the first embodiment are given the same reference numerals and their explanations will be omitted.

Figure 4 is a partially developed view of a tire 11 according to the second embodiment of this invention, schematically illustrating the tread surface.

The tire 11 of the second embodiment comprises width direction grooves 4, which are connected to the shoulder main grooves 21a and 21b, respectively, and extend in the tire width direction (in this embodiment, at a predetermined angle exceeding 0° with respect to the tire width direction), and open at the tread edge TE.

In the tire 11 of the second embodiment, the width direction grooves 4 are disposed on the shoulder land portions 31a and 31b, are connected to the shoulder main grooves 21a or 21b, respectively, extend in the tire width direction, and open at the tread edge TE.

The width direction grooves 4 can be either line symmetrically or point symmetrically arranged with respect to the tire equatorial plane CL, and need not be either line symmetrically or point symmetrically arranged with respect to the tire equatorial plane CL. In the example in Figure 4, the width direction grooves 4 disposed on the shoulder land portion 31a and the width direction grooves 4 disposed on the shoulder land portion 31b are arranged so as to be displaced in the tire circumferential direction from a point-symmetrical state with respect to the tire equatorial plane CL.

By providing the width direction grooves 4, which are connected to the shoulder main grooves 21a and 21b, extend in the tire width direction, and open at the tread edge TE, an air flow is formed from the shoulder main grooves 21a and 21b to the tread edge TE side, that is toward the outer side in the tire width direction, effectively reducing air column resonance sound generated in the shoulder main grooves 21a and 21b. This configuration can also promote drainage from the shoulder main grooves 21a and 21b to the tread edge TE side, which contributes to maintaining the drainage performance of the tire better than when no width direction grooves were provided.

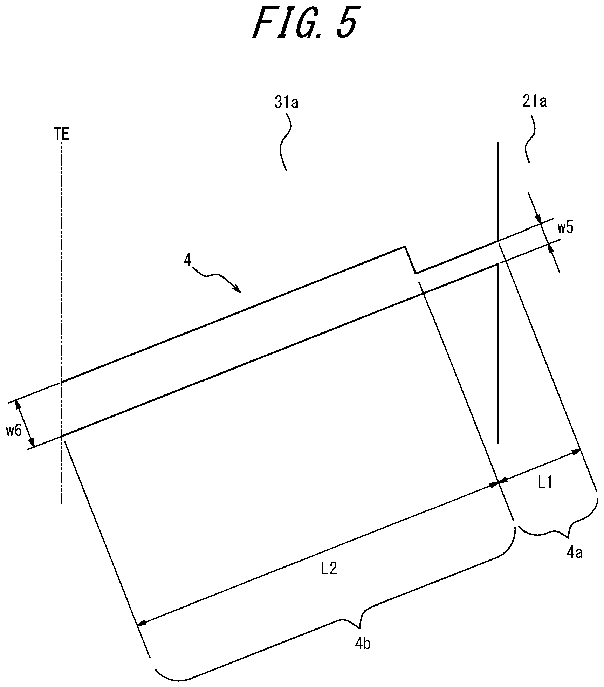

Hereinafter, with reference to Figures 4 and 5, preferred configurations and modified examples of the width direction groove 4 will be described. Figure 5 is a partially developed view, schematically illustrating an enlarged portion of the tread surface in Figure 4. For illustration purposes, however, Figure 5 is drawn at a slightly different scale than Figure 4.

Although the width direction grooves 4 are disposed in the shoulder land portions 31a and 31b, respectively, theses have the same configuration, as mentioned above, except that they are arranged so as to be displaced in the tire circumferential direction from a point-symmetrical state with respect to the tire equatorial plane CL in the example in Figure 4. Therefore, the width direction grooves 4 disposed in the shoulder land portion 31a will be described below as a typical example.

The width direction groove 4 may have a shape with constant groove width on the tread surface 1, or a shape in which the groove width changes in the middle of the tire width direction. The width direction groove 4 preferably has a larger groove width at the tread surface 1 on the side opening to the tread edge TE than on the side connecting to the shoulder main groove 21a. As illustrated in Figure 5, the width direction groove 4 comprises a first portion of width direction groove 4a that is connected to the shoulder main groove 21a, and a second portion of width direction groove portion 4b that is adjacent to and connected to the first portion of width direction groove 4a at the tread edge TE side and opens at the tread edge TE. The groove width w6 at the tread surface 1 of the second portion of width direction groove 4b is larger than the groove width w5 at the tread surface 1 of the first portion of width direction groove 4a.

According to this configuration, air flow from the narrower first portion of width direction groove 4a, which is connected to the shoulder main groove 21a, to the wider second portion of width direction groove 4b is formed, and this promotes air flow outward in the tire width direction and further reduces air column resonance sound. In addition, moisture can easily flow from the narrower first portion of width direction groove 4a to the wider second portion of width direction groove 4b, and this facilitates drainage to the tread edge TE side and contributes more to maintaining drainage performance of the tire.

In the width direction groove 4, the groove width w5 of the first portion of width direction groove 4a, which is connected to the shoulder main groove 21a, is preferably at least 1 mm narrower than the groove width w6 of the second portion of width direction groove 4b. This configuration allows for more effective reduction of air column resonance sound.

In the tire 11 of the second embodiment, the groove width w5 at the tread surface 1 of the first portion of width direction groove 4a is preferably 0.3 mm or more. This configuration allows sufficient air to flow from the shoulder main groove 21a into the first portion of width direction groove 4a, thereby providing a better function of reducing air column resonance sound. More suitably, it is 0.4 mm or more.

In the width direction groove 4, the groove width w6 at the tread surface 1 of the second portion of width direction groove 4b opening at the tread edge TE only needs to have a groove width that prevents the two side walls from contacting each other when the tire is grounded, however, it is more preferred to have a groove width of 1.5 mm or more. This configuration can effectively reduce air column resonance sound and contribute to maintaining the drainage performance.

The groove depth of the first portion of width direction groove 4a of the width direction groove 4 is preferably about the same as that of the second portion of width direction groove 4b. This is because, according to this configuration, drainage performance can be maintained and air column resonance sound can be reduced even in tires after wear.

In addition, in the width direction groove 4, the groove depth of the second portion of width direction groove 4b is preferably as deep as the shoulder main groove 21a. More specifically, the groove depth of the second portion of width direction groove 4b is suitably 3.0 mm or more. This contributes to maintain drainage performance. From the viewpoint of the rigidity of the tire 11, the groove depth of the second portion of width direction groove 4b is suitably 20 mm or less. More preferably, the groove depth of the second portion of width direction groove 4b is 3.0 mm or more in terms of maintaining drainage performance, and 15 mm or less in terms of rigidity of the tire 10.

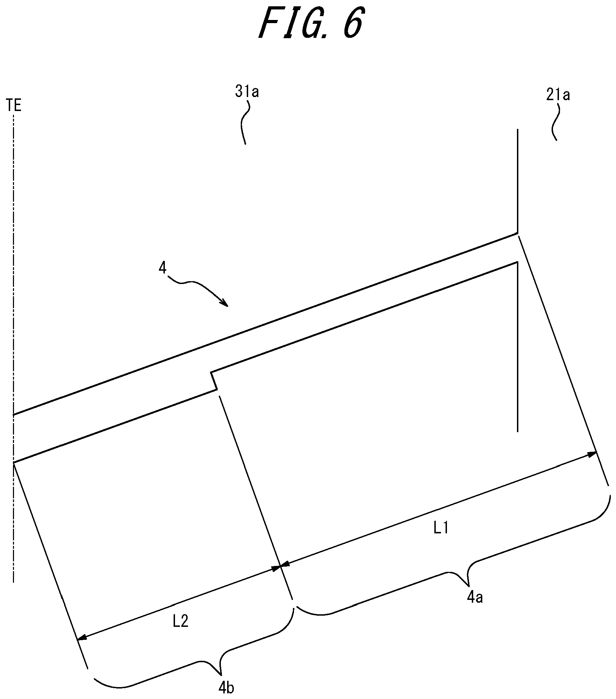

The width direction groove 4 has a length L1, along its extending direction, of the first portion of width direction groove 4a shorter than the length L2, along its extending direction, of the second portion of width direction groove 4b in the examples in Figures 4 and 5. However, not limited to this configuration, the length L1, along its extending direction, of the first portion of width direction groove 4a may be longer than the length L2, along its extending direction, of the second portion of width direction groove 4b, as illustrated in Figure 6. However, the length L1 being shorter than the length L2 is preferable in terms of providing a volume difference between the first portion of width direction groove 4a and the second portion of width direction groove 4b so that to reducing air column resonance sound.

The width direction groove 4 preferably has an inclination angle θ5 (Figure 4) of 0° to 20° relative to the tire width direction at the tread surface 1. By setting the inclination angle between 0° and 20°, air column resonance sound can be reduced, while preventing uneven wear at the opening end of the width direction groove 4 to the shoulder main groove 21a, as well as the generation of other noises. The inclination angle θ5 is more preferably between 5° and 15° in terms of preventing uneven wear and other noise generation.

In the second embodiment, the width direction grooves 4 are preferably disposed at both ends of the ground contact patch so that the number of grooves in the ground contact patch of the tire 11 is 4 to 10 in total at both ends of the ground contact patch. Here, in the "number of grooves in the ground contact patch", if any part of the width direction groove 4 is located in the ground contact patch, it is considered to be located in the ground contact patch.

This configuration can more effectively reduce air column resonance sound and contribute to maintain drainage performance.

More specifically, the width direction grooves 4 are preferably disposed at intervals of 10 to 40 mm in the tire circumferential direction on one side of the tread edge TE bounded by the tire equatorial plane CL. This configuration can more effectively reduce air column resonance sound and contribute to maintain drainage performance. More preferably, they are disposed at intervals of 20 to 30 mm in the tire circumferential direction.

### INDUSTRIAL APPLICABILITY

The tires according to the present invention can be used for any type of pneumatic tire, but are suitably used for passenger vehicle pneumatic tires.

### REFERENCE SIGNS LIST

1 Tread surface
2 Circumferential main groove
4 Width direction groove
4a First portion of width direction groove
4b Second portion of width direction groove
10, 11 Tire
21a, 21b Shoulder main grooves
22 Center main groove
31a, 31b Shoulder land portion
32a, 32b Center land portion
60 Belt
70 Carcass
80 Tread rubber
90 Tread portion
211a, 211b, 212a, 212b Groove wall
CL Tire equatorial plane
TE Tread edge

## Claims

1. A tire (10) comprising three or more circumferential main grooves (21a, 21b, 22), on a tread surface (1), extending in the tire circumferential direction and having a groove width that prevents two side walls from contacting each other when the tire (10) is grounded, wherein
among the three or more circumferential main grooves (21a, 21b, 22), both of a pair of shoulder main grooves (21a, 21b) disposed on the outermost side in the tire width direction are configured such that inclination angle formed by a groove wall (211a, 211b) on a tread edge (TE) side and the tread surface (1) is greater than 90°,
the both of the pair of shoulder main grooves (21a, 21b) are configured such that the inclination angle formed by a groove wall (212a, 212b) on the tire equatorial plane (CL) side and the tread surface (1) is 90° or less, and
among the three or more circumferential main grooves (21a, 21b, 22), at least one circumferential main groove (22) other than the pair of shoulder main grooves (21a, 21b) is configured such that a maximum groove width position in the groove depth direction is located on a groove bottom side than a tread surface position.

2. The tire (10) according to claim 1, comprising a width direction groove (4) that is connected to the shoulder main groove (21a, 21b), extends in the tire width direction, and opens at the tread edge (TE).

3. The tire (10) according to claim 2 , wherein the width direction groove (4) has a greater groove width on the tread edge (TE) side than on the side connecting to the shoulder main groove (21a, 21b).

## Patentansprüche

1. Reifen (10), der drei oder mehr umlaufende Hauptrillen (21a, 21b, 22), auf einer Lauffläche (1), umfasst, die sich in der Reifenumfangsrichtung erstrecken und eine Rillenbreite aufweisen, die verhindert, dass zwei Seitenwände einander berühren, wenn der Reifen (10) in Bodenberührung gebracht wird, wobei
unter den drei oder mehr umlaufenden Hauptrillen (21a, 21b, 22) beide von einem Paar von Schulterhauptrillen (21a, 21b), die auf der in der Reifenbreitenrichtung äußersten Seite angeordnet sind, derart konfiguriert sind, dass ein Neigungswinkel, der durch eine Rillenwand (211a, 211b) auf einer Seite einer Laufflächenkante (TE) und die Lauffläche (1) gebildet wird, größer als 90° ist,
die beiden von dem Paar von Schulterhauptrillen (21a, 21b) derart konfiguriert sind, dass der Neigungswinkel, der durch eine Rillenwand (212a, 212b) auf der Seite einer Reifenäquatorialebene (CL) und die Lauffläche (1) gebildet wird, 90° oder weniger beträgt, und
unter den drei oder mehr umlaufenden Hauptrillen (21a, 21b, 22) mindestens eine andere umlaufende Hauptrille (22) als das Paar von Schulterhauptrillen (21a, 21b) derart konfiguriert ist, dass sich eine Position maximaler Rillenbreite in der Rillentiefenrichtung weiter auf einer Rillensohlenseite befindet als eine Laufflächenposition.

2. Reifen (10) nach Anspruch 1, der eine Breitenrichtungsrille (4) umfasst, die mit der Schulterhauptrille (21a, 21b) verbunden ist, sich in der Reifenbreitenrichtung erstreckt und sich an der Laufflächenkante (TE) öffnet.

3. Reifen (10) nach Anspruch 2, wobei die Breitenrichtungsrille (4) auf der Seite der Laufflächenkante (TE) eine größere Rillenbreite aufweist als auf der Seite, die sich mit der Schulterhauptrille (21a, 21b) verbindet.

## Revendications

1. Pneu (10) comprenant trois rainures principales circonférentielles (21a, 21b, 22) ou plus sur une surface de bande de roulement (1), s'étendant dans la direction circonférentielle du pneu et présentant une largeur de rainure qui empêche deux parois latérales d'entrer en contact l'une avec l'autre lorsque le pneu (10) repose sur le sol, dans lequel
parmi les trois rainures principales circonférentielles (21a, 21b, 22) ou plus, les deux d'une paire de rainures principales d'épaulement (21a, 21b) disposées sur le côté le plus à l'extérieur dans la direction de la largeur du pneu sont configurées de sorte qu'un angle d'inclinaison formé par une paroi de rainure (211a, 211b) sur un côté de bord de bande de roulement (TE) et la surface de bande de roulement (1) est supérieur à 90°,
les deux de la paire de rainures principales d'épaulement (21a, 21b) sont configurées de sorte que l'angle d'inclinaison formé par une paroi de rainure (212a, 212b) sur le côté de plan équatorial (CL) du pneu et la surface de bande de roulement (1) est de 90° ou moins, et
parmi les trois rainures principales circonférentielles (21a, 21b, 22) ou plus, au moins une rainure principale circonférentielle (22) autre que la paire de rainures principales d'épaulement (21a, 21b) est configurée de sorte qu'une position de largeur maximale de rainure dans la direction de profondeur de rainure est située plus sur un côté de fond de rainure qu'une position de surface de bande de roulement.

2. Pneu (10) selon la revendication 1, comprenant une rainure dans la direction de la largeur (4) qui est connectée à la rainure principale d'épaulement (21a, 21b), s'étend dans la direction de largeur du pneu et s'ouvre au niveau du bord de bande de roulement (TE).

3. Pneu (10) selon la revendication 2, dans lequel la rainure dans la direction de la largeur du pneu (4) a une largeur de rainure sur le côté du bord de bande de roulement (TE) supérieure à celle sur le côté se connectant à la rainure principale d'épaulement (21a, 21b).
